# EUROPEAN PATENT APPLICATION

(11) **EP 0 911 212 A1**
(43) Date of publication of application: **28.04.1999**
(21) Application number: 98904181.9
(22) Date of filing: 26.02.1998
(51) Int. Cl.: B60P 3/42, B60P 3/35, B62D 63/06

(54) **CONVERTIBLE TRAILER**

(30) Priority: 06.05.1997 ES 9701229 U
(71) Applicant: Ripoll Cots, Felipe, 03590 Altea (ES)
(72) Inventor: Ripoll Cots, Felipe, 03590 Altea (ES)
(74) Representative: Urizar Anasagasti, Jesus Maria
(86) International application number: ES9800046
(87) International publication number: WO9850253

(57) **Abstract**

Convertible trailer comprising a frame carrying a axle with wheels and a towing bar couplable to any conventional vehicle, characterised in that said structure is completed with: a) two side boards (1 and 2) which are set vertically during transportation and which form a table when placed horizontally on top of the structure of the trailer; b) additional "T" elements (3) which can he introduced into rails (4) welded to the structure of the trailer and to which a support leg (5) can he connected thereby providing a means for fixing a seat (6) or, on two supports of a same side, an additional board (7) similar to a counter can be arranged, thus conforming an assembly comprised of a table and seats appropriate for camping or other outdoor activities.

## Description

The present invention refers to a trailer of the type comprising a chassis carrying an axle with wheels and a hauling rod which may be coupled to any conventional vehicle, like a car, a multipurpose vehicle or similar, having the special particularity that it is totally convertible into a table and chairs, suitable for the country and other open air activities.

Trailer vehicles of this type are normally used by campers to transport tents, tables, chairs and all the accessories they normally require in an open air camp. Due to the limited capacity of this type of trailer, it is necessary to make a layout and preliminary study of the habitat to be able to introduce in the trailer all the fixtures required, and even so, there is not enough room for determined implements or accessories.

The trailer herein described favourably solves this problem, since on the one hand, it has a configuration, such that it complements the conventional trailer, giving it a greater height by using lateral boards which on being removed from this position and placing them on top of the trailer itself in a horizontal position they form a table. The seats are defined by means of some "T" accessories introduced in some rails welded on the trailer structure and which are supplemented in their lower parts by means of a support leg, hence defining in the upper part a seat coupling means; or on two of the supports of the same side of an extra board serving as a counter.

With this solution, trailer height is gained and as a result the complementary seats may be incorporated in it which, on the other hand, approximately occupy the same space as other conventional seats, hence gaining in capacity, comfort and functionality, due to the fact that the conversion of the trailer into a table and seat set or viceversa is easily performed.

The object of he present invention will be understood better with the aid of the following description, made on the basis of a practical example of embodiment. This description is made according to the attached drawings, wherein:.
Figure 1 shows a general view in perspective of a convertible trailer object of the present invention.
Figure 2 likewise represents a perspective view of this trailer in the unfolded position forming a table and side seats.

The trailer hereby described is of the conventional type and is formed by a structure or chassis carrying and axle with wheels and a hauling rod, which may be coupled to any vehicle of the conventional type. A trailer of these characteristics has been complemented in its structure with:
- Two boards (1) and (2), placed laterally and in a vertical sense during transport and likewise, may be placed horizontally on the own structure of the trailer to form a table.
- With some "T" accessories (3), which are introduced into some rails (4) welded on the trailer structure and supplemented in their lower part with a support leg (5) fitted vertically, to define in its upper part a means of supporting a seat (6) or, in the case of two supports of the same side, of a board (7) acting as a counter, and for such a purpose a steel section has been welded on the trailer side at the height of fitting this counter.

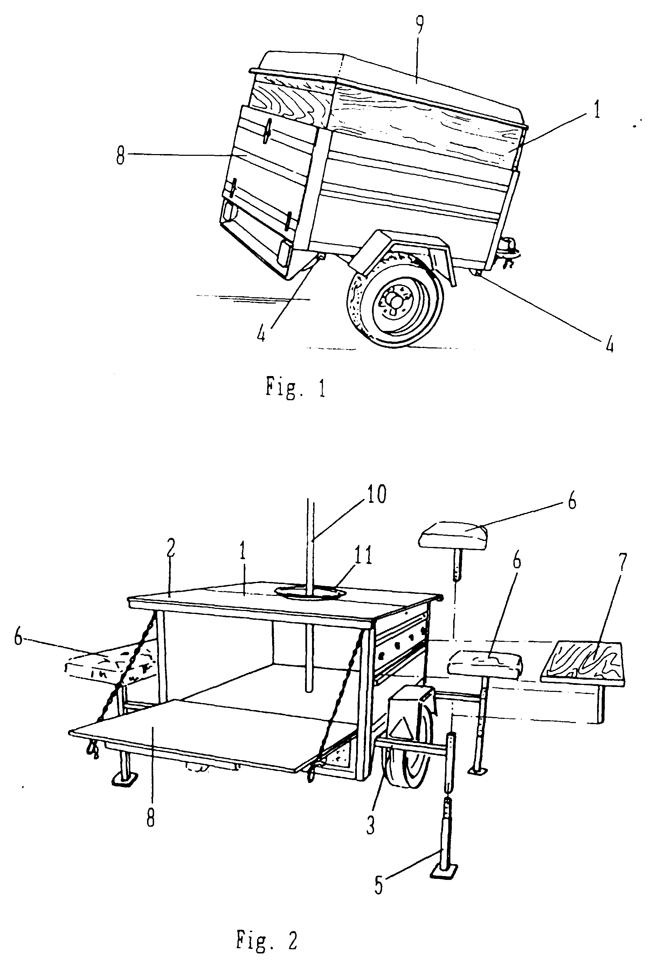

The boards (1) and (2) have in height (see figure 1) a greater length than the sides of the trailer structure, which, to form a closed area, has been complemented in the front and rear coffer walls (8) to define a parallelepipedic block as a whole which is closed with an upper conventional tray (9). As a whole, it defines an elevation that increases the internal space of the trailer providing space for the seating and counter accessories without prejudicing the existing space for other more usual purposes and without considering that a table and chairs are going to occupy more room that that defined for said chairs and counters.

The rear coffer wall (8) is supported by means of a chain in a horizontal position backwards, as may be observed in figure 2, hence constituting a counter or auxiliary support zone in the form of a lower table.

The boards (1) and (2) normally have coupling means between each other and/or in the upper part of the trailer when placed in horizontal position, to form a table and defining in the central zone a hole allowing the passage of the post (10) of a sun-shade fitted in the centre thereof to protect the users from the sun. Likewise, and optionally, this post (10) is made to pass through a rotating tray (11) fitted in the centre.

It is not considered necessary to extend this description any further for any expert in the matter to understand the scope of the invention and the advantages that may be derived from it.

The terms in which this specification has been drafted should always be taken in the widest and non-limiting sense.

The materials, shape and arrangement of the components may be varied provided this does not involve a change of the fundamental characteristics of the invention, which are claimed below.

## Claims

1. A convertible trailer, comprising a chassis carrying an axle with wheels and a hauling rod which may be coupled to any conventional vehicle, characterised in that said structure has been complemented with: a) two lateral boards (1) and (2) fitted vertically during transport and constituting a table on fitting them horizontally over the trailer structure; b) some "T" accessories (3) which are introduced in rails (4) welded on the trailer structure, which are supplemented with a support leg (5) and define in the upper part a seat fixing means (6) or, on two supports of a same side, an additional board (7) acting as a counter, hence forming a table and seat assembly, suitable for camping or other open air activities.

2. A convertible trailer, according to the previous claim, characterised in that the front and rear coffer walls (8) have been added to gain height of the lateral boards themselves (1) and (2), closing all of them by means of an upper conventional tray (9) and defining an elevation in the transport position which increases the internal space of the trailer giving room for the seat and counter supplements, without prejudice to the space existing for other purposes.

3. A convertible trailer, according to the previous claims, characterised in that the boards (1) and (2) have means of coupling to each other and/or in the upper part of the trailer and towards the central zone, define a hole for the passage of a sunshade post (10), which optionally is made to pass through a rotating tray (11).
